# EUROPEAN PATENT APPLICATION

(11) **EP 4 575 372 A1**
(43) Date of publication of application: **25.06.2025**
(21) Application number: 23897379.6
(22) Date of filing: 02.11.2023
(51) Int. Cl.: F28D 9/00, F25B 1/00, B60H 1/32, F25B 41/40

(54) **MANIFOLD**

(30) Priority: 29.11.2022 JP 2022190703; 08.03.2023 JP 2023035804
(71) Applicant: AISIN CORPORATION, Kariya-shi, Aichi 448-8650 (JP)
(72) Inventor: ITO, Yoshikuni, Kariya-shi, Aichi 448-8650 (JP); OTSUKA, Kosuke, Kariya-shi, Aichi 448-8650 (JP)
(74) Representative: Kramer Barske Schmidtchen Patentanwälte PartG mbB
(86) International application number: PCT/JP2023/039725
(87) International publication number: WO 2024/116724

(57) **Abstract**

A manifold includes: a high-temperature channel through which a high-temperature fluid flows; a low-temperature channel through which a low-temperature fluid having a lower temperature than the high-temperature fluid flows; and a manifold body having the high-temperature channel and the low-temperature channel. The high-temperature channel and the low-temperature channel are disposed close to each other. The manifold body has a thermal insulation space between the high-temperature channel and the low-temperature channel in a location where the high-temperature channel and the low-temperature channel are disposed close to each other.

## Description

### TECHNICAL FIELD

The present disclosure relates to a manifold.

### BACKGROUND ART

In recent years, vehicles including a motor as a traveling drive source (hybrid electric vehicle (HEV), plug-in hybrid electric vehicle (PHEV), battery electric vehicle (BEV), fuel cell electric vehicle (FCEV), etc.) have been widespread. These vehicles (hereinafter collectively referred to as "electrified vehicles") include a battery to drive the motor. The electrified vehicles include many devices that require cooling, such as a motor (including an internal combustion engine such as an engine), a battery, an air conditioner, and an ECU. Therefore, these are cooled by cooling circuits through which a coolant and a refrigerant circulate. However, appropriate operating temperatures of these devices may differ from each other. In such a case, in order to vary the temperature of the circulating coolant or refrigerant for the devices with different operating temperatures, heat is exchanged through a heat exchanger such as a chiller or a water-cooled condenser to control the temperature of the coolant or refrigerant.

In a vehicle thermal management system disclosed in Patent Document 1, a manifold (piping plate in Patent Document 1) internally having a plurality of channels (coolant channels in Patent Document 1) is disclosed. The manifold has channels upstream and downstream of a radiator, channels upstream and downstream of a heater core, channels upstream and downstream of a cooler core, channels upstream and downstream of a coolant cooler, channels upstream and downstream of a coolant heater, etc. Hereinafter, the radiator, the heater core, the cooler core, the coolant cooler, and the coolant heater will be collectively referred to as a heat exchanger.

### Related Art Documents

### Patent Documents

Patent Document 1: Japanese Unexamined Patent Application Publication No. 2014-218211 (JP 2014-218211 A)

### SUMMARY OF THE INVENTION

### Problem to be Solved by the Invention

In the vehicle thermal management system disclosed in Patent Document 1, the manifold has channels of the coolant before and after heat exchange in the heat exchanger. That is, the channels of the manifold include both a high-temperature channel through which a high-temperature coolant flows and a low-temperature channel through which a low-temperature coolant flows. Therefore, when the high-temperature channel and the low-temperature channel are disposed close to each other, heat is transferred from the high-temperature channel to the low-temperature channel due to a temperature difference in the coolant between the high-temperature channel and the low-temperature channel, thereby generating thermal stress (tensile stress) near the low-temperature channel. Thus, the manifold may be damaged. When heat is transferred from the high-temperature channel to the low-temperature channel, the heat exchange amount between the refrigerant and the coolant in the heat exchanger decreases. Thus, the efficiency of the entire system may decrease.

The present disclosure has been made in view of the above problems, and has an object to provide a manifold that suppresses heat transfer between a high-temperature channel and a low-temperature channel.

### Means for Solving the Problem

In one embodiment of the manifold according to the present disclosure, the manifold includes: a high-temperature channel through which a high-temperature fluid flows; a low-temperature channel through which a low-temperature fluid having a lower temperature than the high-temperature fluid flows; and a manifold body having the high-temperature channel and the low-temperature channel. The high-temperature channel and the low-temperature channel are disposed close to each other. The manifold body has a thermal insulation space between the high-temperature channel and the low-temperature channel in a location where the high-temperature channel and the low-temperature channel are disposed close to each other.

According to the present embodiment, an expansion force due to heat of the high-temperature fluid acts on the inner circumferential surface of the high-temperature channel, and a contraction force due to cooling by the low-temperature fluid having a lower temperature than the high-temperature fluid acts on the inner circumferential surface of the low-temperature channel. However, a portion particularly close to the high-temperature channel on the inner circumferential surface of the low-temperature channel where the contraction force acts is influenced by the expansion force due to the heat of the high-temperature fluid, and thermal stress (tensile stress) is generated. When the thermal stress acts repeatedly, the portion may be cracked and the manifold may be damaged in the worst case. However, the manifold of the present embodiment has the thermal insulation space in the location where the high-temperature channel and the low-temperature channel are disposed close to each other. Therefore, it is possible to suppress heat transfer between the high-temperature channel and the low-temperature channel. As a result, the action of the expansion force due to the heat of the high-temperature fluid on the low-temperature channel is suppressed, and the generation of the thermal stress in the low-temperature channel can be suppressed.

### BRIEF DESCRIPTION OF THE DRAWINGS

[FIG. 1] FIG. 1 is a configuration diagram of a refrigerant circuit including a manifold according to a first embodiment.
[FIG. 2] FIG. 2 is a perspective view showing a schematic configuration of the manifold.
[FIG. 3A] FIG. 3A is a plan view of the manifold.
[FIG. 3B] FIG. 3B is a bottom view of the manifold.
[FIG. 4] FIG. 4 is a sectional view taken along line IV-IV and seen in the direction of arrows in FIG. 3A.
[FIG. 5] FIG. 5 is a sectional view of a manifold according to a modification of the first embodiment.
[FIG. 6] FIG. 6 is a sectional view of a die-casting mold for manufacturing a housing body to be used in the manifold according to the first embodiment.

### MODES FOR CARRYING OUT THE INVENTION

### [First Embodiment]

Hereinafter, embodiments of a manifold according to the present disclosure will be described in detail with reference to the drawings. The embodiments described below are merely examples illustrating the present disclosure, and the present disclosure is not limited to only these embodiments. Therefore, the present disclosure can be carried out in various forms without departing from the spirit and scope of the present disclosure.

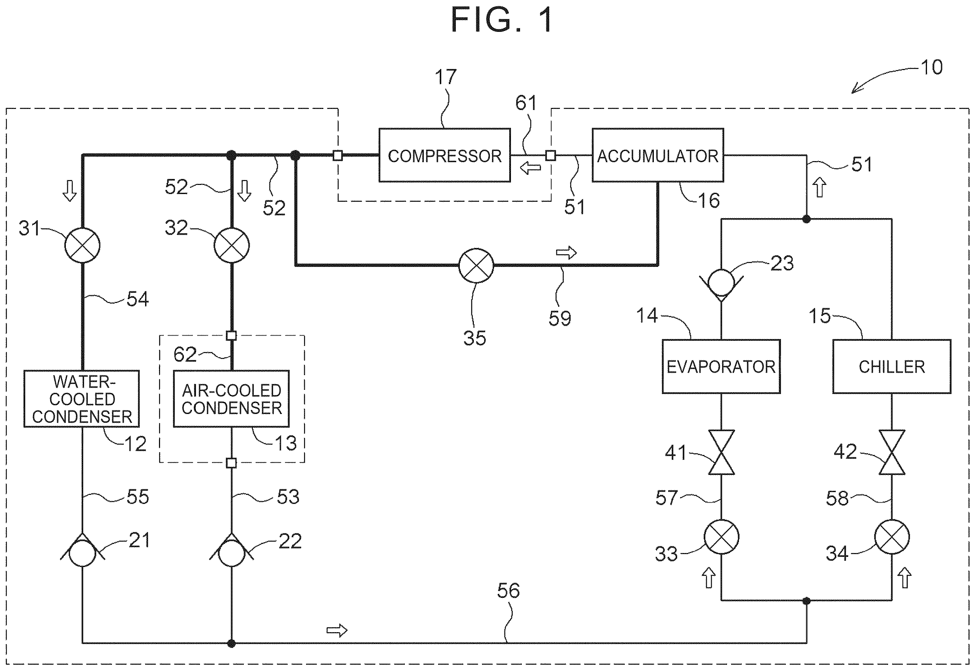

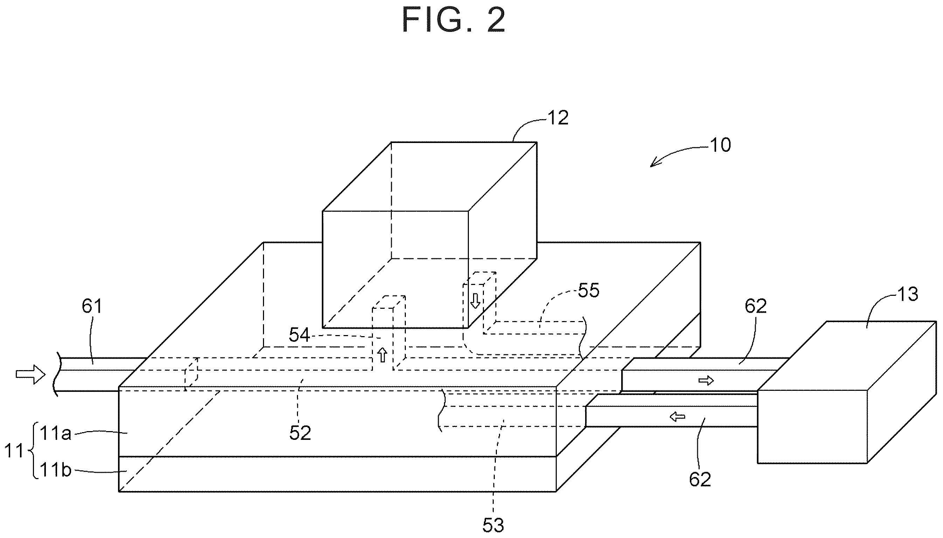

As shown in FIG. 1, a refrigerant circuit is formed in a manifold 10 according to the present embodiment. A refrigerant such as hydrofluorocarbon (HFC) or hydrofluoroolefin (HFO) flows through the refrigerant circuit. In FIG. 1, a portion enclosed by dashed lines is the manifold 10 according to the present embodiment. The manifold 10 includes a housing 11 (an example of a manifold body; see FIG. 2 as well) and auxiliary devices attached to the housing 11, including a water-cooled condenser 12 (an example of a condenser), an evaporator 14, a chiller 15, an accumulator 16, a first check valve 21, a second check valve 22, a third check valve 23, a first on-off valve 31, a second on-off valve 32, a third on-off valve 33, a fourth on-off valve 34, a fifth on-off valve 35, a first expansion valve 41, and a second expansion valve 42. In FIG. 1, the auxiliary devices are depicted as being inside the housing 11. However, they are actually mounted on the outer surface of the housing 11. An air-cooled condenser 13 (an example of the condenser) and a compressor 17 (an example of a compressor) are connected to the outside of the manifold 10 via channels. FIG. 2 is a schematic configuration diagram of the manifold 10. In FIG. 2, illustration is omitted for the auxiliary devices other than the water-cooled condenser 12 and the related channels. In the present embodiment, the housing 11 is made of a metal material having high thermal conductivity, including aluminum. As shown in FIG. 2, the channels constituting the refrigerant circuit are formed by forming grooves and holes in a housing body 11a of the housing 11 and attaching a lid 11b so as to close the grooves.

The refrigerant circuit formed by the manifold 10 is formed inside and outside the housing 11. As shown in FIG. 1, a first internal channel 51 (an example of a low-temperature channel) is formed inside the housing 11 of the manifold 10. The accumulator 16 is disposed midway along the first internal channel 51. A first external channel 61 formed outside the housing 11 is connected to a downstream side of the first internal channel 51 in a refrigerant flow direction indicated by arrows in FIG. 1 (hereinafter, an upstream side and a downstream side in the refrigerant flow direction in the refrigerant circuit will also be simply referred to as an upstream side and a downstream side). The compressor 17 is disposed midway along the first external channel 61. The first external channel 61 is connected at its downstream end to a second internal channel 52 (an example of a high-temperature channel) formed inside the housing 11. The second on-off valve 32 is disposed midway along the second internal channel 52, and the downstream end of the second internal channel 52 is connected to a second external channel 62 formed outside the housing 11. The air-cooled condenser 13 is disposed midway along the second external channel 62, and the downstream end of the second external channel 62 is connected to a third internal channel 53 (an example of the low-temperature channel) formed inside the housing 11. The second check valve 22 is disposed midway along the third internal channel 53.

A fourth internal channel 54 (an example of the high-temperature channel) formed inside the housing 11 branches from the second internal channel 52 on the upstream side of the second on-off valve 32. The first on-off valve 31 is disposed midway along the fourth internal channel 54, and the water-cooled condenser 12 is connected to the downstream end of the fourth internal channel 54. A fifth internal channel 55 (an example of the low-temperature channel) formed inside the housing 11 is connected to the downstream side of the water-cooled condenser 12, and the first check valve 21 is disposed midway along the fifth internal channel 55. Both the downstream end of the fifth internal channel 55 and the downstream end of the third internal channel 53 are connected to a sixth internal channel 56 (an example of the low-temperature channel) formed inside the housing 11.

The sixth internal channel 56 branches at its downstream end into a seventh internal channel 57 (an example of the low-temperature channel) and an eighth internal channel 58 (an example of the low-temperature channel) formed inside the housing 11. In the seventh internal channel 57, the third on-off valve 33, the first expansion valve 41, the evaporator 14, and the third check valve 23 are disposed in this order from the upstream side. In the eighth internal channel 58, the fourth on-off valve 34, the second expansion valve 42, and the chiller 15 are disposed in this order from the upstream side. Both the downstream end of the seventh internal channel 57 and the downstream end of the eighth internal channel 58 are connected to the first internal channel 51, and the downstream side of the first internal channel 51 is connected to the accumulator 16.

In addition to the first internal channel 51, a ninth internal channel 59 (an example of the high-temperature channel) branching from the second internal channel 52 on the upstream side of the second on-off valve 32 is connected to the upstream side of the accumulator 16. The ninth internal channel 59 is formed inside the housing 11. The fifth on-off valve 35 is disposed midway along the ninth internal channel 59.

Next, the flow of the refrigerant in the refrigerant circuit will be described. The refrigerant that flows through the first external channel 61 and turns into a high-temperature compressed gas (an example of a high-temperature fluid and a gas refrigerant) in the compressor 17 flows through the first external channel 61 and flows into the second internal channel 52. The gas refrigerant flowing into the second internal channel 52 flows into either or both of the water-cooled condenser 12 and the air-cooled condenser 13 based on the temperature of an unillustrated coolant that will exchange heat with the gas refrigerant in the water-cooled condenser 12 and the traveling speed of the vehicle. An unillustrated ECU (Electronic Control Unit) determines the channel through which the refrigerant will flow. Based on an instruction from the ECU, at least one of the first on-off valve 31 and the second on-off valve 32 is opened to cause the gas refrigerant to flow. The gas refrigerant flowing into the water-cooled condenser 12 is condensed and liquefied into a liquid refrigerant as heat is removed by the unillustrated coolant. The gas refrigerant flowing into the air-cooled condenser 13 is condensed and liquefied into a liquid refrigerant as heat is removed by traveling wind generated when the vehicle is traveling or by forced airflow from an unillustrated fan.

The liquid refrigerant that is liquefied by the water-cooled condenser 12 and/or the air-cooled condenser 13 and is to be used for cooling the vehicle cabin flows through the sixth internal channel 56 and flows into the seventh internal channel 57 where the third on-off valve 33 is open. The refrigerant is then expanded by the first expansion valve 41 into a low-temperature and low-pressure mist, and then flows into the evaporator 14. The misty refrigerant is evaporated in the evaporator 14 by removing heat from air introduced from the outside. Conversely, the air is cooled as heat is removed by the refrigerant, and the air is sent to the vehicle cabin as cool air. The evaporated and gasified refrigerant flows into the first internal channel 51 through the third check valve 23 disposed in the seventh internal channel 57, and flows into the accumulator 16. When the gasified refrigerant contains a liquid, the accumulator 16 separates the liquid refrigerant from the gasified refrigerant and accumulates it under pressure. Then, the gasified refrigerant flows through the first external channel 61 from the first internal channel 51 and returns to the compressor 17. In the compressor 17, the refrigerant is compressed again into a high-temperature compressed gas (gas refrigerant).

The liquid refrigerant that is liquefied by the water-cooled condenser 12 and/or the air-cooled condenser 13 and is not to be used for cooling the vehicle cabin flows through the sixth internal channel 56 and flows into the eighth internal channel 58 where the fourth on-off valve 34 is open. The refrigerant is then expanded by the second expansion valve 42 into a low-temperature and low-pressure mist, and is then sent to the chiller 15. The misty refrigerant is evaporated in the chiller 15 by removing heat from a coolant flowing in from an unillustrated channel. The evaporated and gasified refrigerant flows into the first internal channel 51 through the eighth internal channel 58, and flows into the accumulator 16. Since the seventh internal channel 57 has the third check valve 23, the refrigerant does not flow into the evaporator 14. When the gasified refrigerant contains a liquid, the accumulator 16 separates the liquid refrigerant from the gasified refrigerant and accumulates it under pressure. Then, the gasified refrigerant flows through the first external channel 61 from the first internal channel 51 and returns to the compressor 17. In the compressor 17, the refrigerant is compressed again into a high-temperature compressed gas (gas refrigerant).

When the outside air temperature is extremely low, the temperature of the refrigerant is also low. Therefore, there is a possibility that the refrigerant does not have a sufficiently high temperature when it is compressed only once by the compressor 17. In such a case, in the present embodiment, a high-temperature compressed gas can be produced by compressing the refrigerant multiple times in the compressor 17. To compress the refrigerant multiple times in the compressor 17, the first on-off valve 31 and the second on-off valve 32 are closed and the fifth on-off valve 35 is opened. Then, the refrigerant compressed by the compressor 17 is caused to flow through the ninth internal channel 59 and return to the accumulator 16. Then, the refrigerant is sent to the compressor 17 again and is compressed by the compressor 17. This operation is repeated until the temperature of the refrigerant increases sufficiently. When the temperature of the refrigerant increases sufficiently, the fifth on-off valve 35 is closed and the first on-off valve 31 and the second on-off valve 32 are opened.

In the internal channels of the manifold 10 of the present embodiment, a high-temperature refrigerant (an example of the high-temperature fluid) flows through the second internal channel 52, the fourth internal channel 54, and the ninth internal channel 59 indicated by wide continuous lines in FIG. 1. A low-temperature refrigerant (an example of a low-temperature fluid) flows through the first internal channel 51, the third internal channel 53, the fifth internal channel 55, the sixth internal channel 56, the seventh internal channel 57, and the eighth internal channel 58 indicated by narrow continuous lines in FIG. 1.

As shown in FIG. 2, the second internal channel 52, the third internal channel 53, and the fifth internal channel 55 are disposed close to and parallel to each other inside the housing 11. As described above, the high-temperature refrigerant flows through the second internal channel 52, and the low-temperature refrigerant flows through the third internal channel 53 and the fifth internal channel 55. Therefore, an expansion force due to heat acts on the inner circumferential surface of the second internal channel 52 of the housing 11, and a contraction force due to cooling acts on the inner circumferential surfaces of the third internal channel 53 and the fifth internal channel 55. However, portions particularly close to the second internal channel 52 on the inner circumferential surfaces of the third internal channel 53 and the fifth internal channel 55 where the contraction force acts are influenced by the expansion force due to the heat of the high-temperature refrigerant, and thermal stress (tensile stress) is generated. When the thermal stress acts repeatedly, the portions may be cracked and the manifold 10 may be damaged in the worst case.

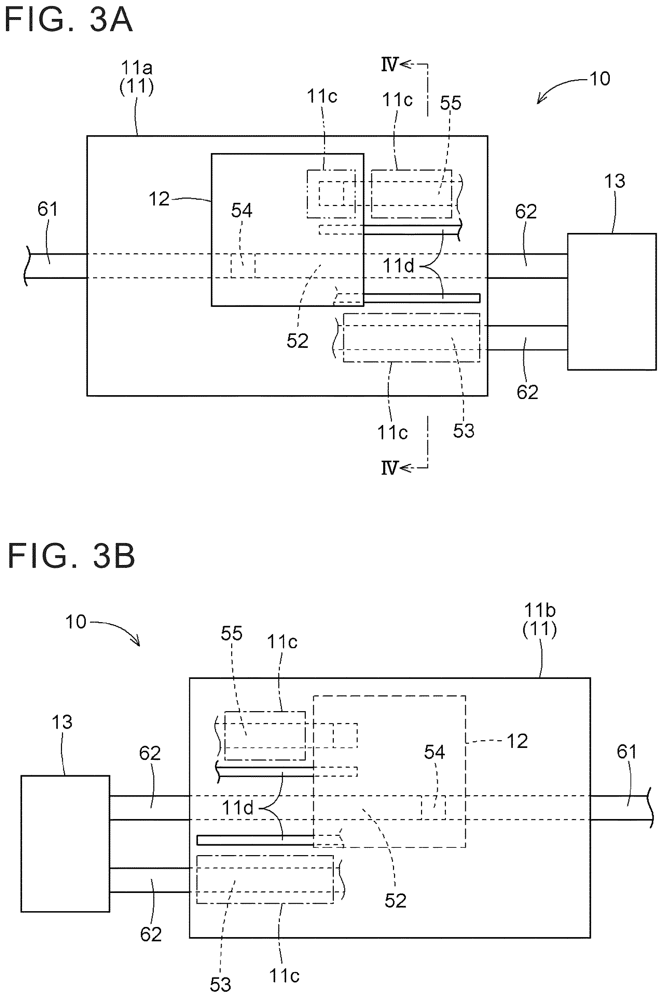

As shown in FIGS. 3A and 3B, in order to suppress the generation of the thermal stress on the inner circumferential surfaces of the third internal channel 53 and the fifth internal channel 55, shot peening is performed on the surfaces of the housing 11 including regions where the low-temperature channels (third internal channel 53 and fifth internal channel 55) overlap in plan view, thereby forming shot-peened portions 11c. In the present embodiment, the shot-peened portions 11c are formed in the following locations: (1) the surfaces of the housing body 11a and the lid 11b of the housing 11 in regions overlapping the third internal channel 53 and the fifth internal channel 55 in plan view and in nearby regions, and (2) the periphery of the surface of the housing body 11a that serves as an inlet or an outlet for the auxiliary device (e.g., the water-cooled condenser 12) in the third internal channel 53 and the fifth internal channel 55 in regions overlapping the third internal channel 53 and the fifth internal channel 55 and in nearby regions. The regions indicated by (1) are rectangular regions enclosed by long dashed short dashed lines in FIGS. 3A and 3B, and the region indicated by (2) is a rectangular region enclosed by a long dashed double-short dashed line in FIG. 3A. The above regions (1) and (2) are merely examples. It is appropriate to form the shot-peened portion 11c in a location where thermal stress is generated due to the influence of the expansion force caused by the heat of the high-temperature refrigerant flowing through the second internal channel 52. For example, the shot-peened portion 11c may be formed on a joint plane between the housing body 11a and the lid 11b in a region corresponding to the inner circumferential surface of the third internal channel 53 or the fifth internal channel 55 and in a nearby region. The shot peening is a known technique, and therefore detailed description thereof will be omitted.

When the shot peening is performed, the shot-peened portions 11c on the surface of the housing 11 are hardened and the surface area is increased. Therefore, residual compressive stress is imparted to the shot-peened portions 11c on the surface of the housing 11. Thus, it possible to suppress the generation of the thermal stress (tensile stress) on the inner circumferential surfaces of the third internal channel 53 and the fifth internal channel 55. Since the surface area of the housing 11 can be increased by the shot-peened portions 11c, a larger amount of heat of the high-temperature refrigerant can be released from the surface of the housing 11. As a result, the influence of the expansion force due to the heat of the high-temperature refrigerant flowing through the second internal channel 52 on the third internal channel 53 and the fifth internal channel 55 is reduced. In this regard as well, the generation of the thermal stress can be suppressed. Since the temperature of the high-temperature refrigerant flowing through the second internal channel 52 is reduced by heat dissipation, the temperature that needs to be reduced by the first expansion valve 41 and the second expansion valve 42 is reduced. Thus, a smaller first expansion valve 41 and a smaller second expansion valve 42 can be used.

In the present embodiment, as shown in FIGS. 3A to 4, thermal insulation spaces 11d are provided in the housing 11 between the second internal channel 52 and the third internal channel 53 and between the second internal channel 52 and the fifth internal channel 55. The thermal insulation spaces 11d are through holes formed between the second internal channel 52 and the third internal channel 53 and between the second internal channel 52 and the fifth internal channel 55. Therefore, the thermal insulation spaces 11d are formed from the housing body 11a to the lid 11b. The plurality of (two in the present embodiment) thermal insulation spaces 11d is parallel to each other and also parallel to the second internal channel 52, the third internal channel 53, and the fifth internal channel 55. In the present embodiment, the lengths of the thermal insulation spaces 11d (lengths in the right-left direction of the drawing sheets of FIGS. 3A and 3B) are larger than the lengths over which the second internal channel 52, the third internal channel 53, and the fifth internal channel 55 are disposed parallel to each other. In FIG. 2, illustration of the thermal insulation spaces 11d is omitted.

By providing the thermal insulation spaces 11d in the housing body 11a, it is possible to reduce, by the thermal insulation spaces 11d, the occurrence of a case where the heat of the high-temperature refrigerant (gas refrigerant) flowing through the second internal channel 52 is transferred to the third internal channel 53 and the fifth internal channel 55. As a result, the expansion force acting from the second internal channel 52 on the third internal channel 53 and the fifth internal channel 55 can further be suppressed, and the generation of the thermal stress can further be suppressed. By disposing the two thermal insulation spaces 11d parallel to the second internal channel 52, the third internal channel 53, and the fifth internal channel 55, the expansion force acting from the second internal channel 52 on the third internal channel 53 and the fifth internal channel 55 can further be suppressed, and the generation of the thermal stress can further be suppressed.

### [Modification of First Embodiment]

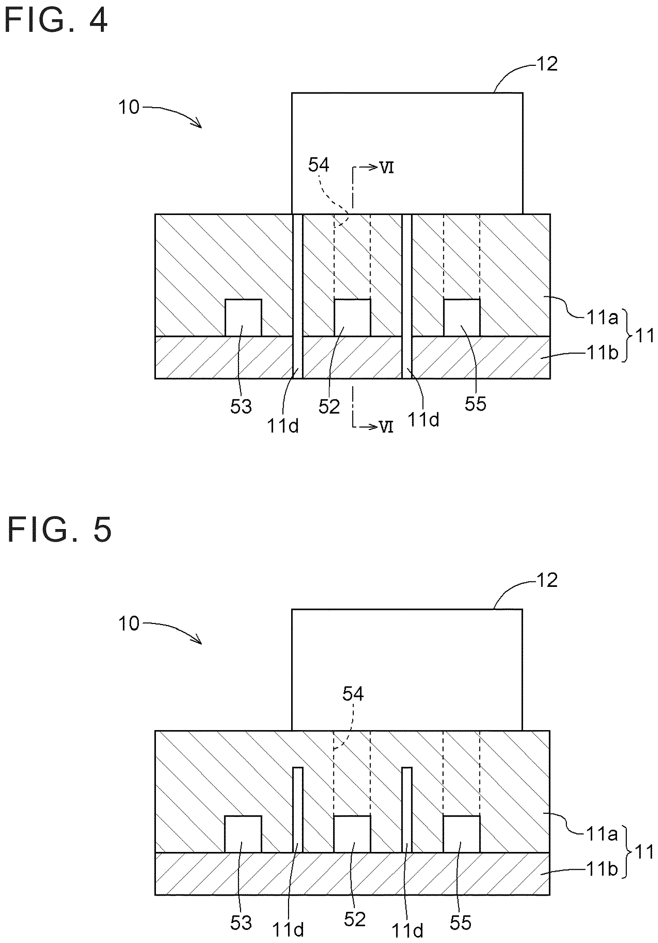

Next, a modification of the first embodiment will be described. As shown in FIG. 5, the present modification differs from the first embodiment in that the thermal insulation spaces 11d formed between the second internal channel 52 and the third internal channel 53 and between the second internal channel 52 and the fifth internal channel 55 are slits instead of the through holes. The other configurations are the same as those of the first embodiment, and therefore detailed description thereof will be omitted.

The thermal insulation spaces 11d in the present modification are slits formed between the second internal channel 52 and the third internal channel 53 and between the second internal channel 52 and the fifth internal channel 55. The thermal insulation spaces 11d are formed from the surface of the housing body 11a having the grooves constituting the internal channels in the depth direction of the grooves. In the present modification, the depths of the thermal insulation spaces 11d from the surface of the housing body 11a are larger than the depths of the grooves constituting the second internal channel 52, the third internal channel 53, and the fifth internal channel 55. The lid 11b does not have the thermal insulation spaces 11d. Therefore, the thermal insulation spaces 11d cannot be seen from the outside of the housing 11.

By providing the slit-shaped thermal insulation spaces 11d in the housing body 11a, it is possible to reduce, by the thermal insulation spaces 11d, the occurrence of a case where the heat of the high-temperature refrigerant flowing through the second internal channel 52 is transferred to the third internal channel 53 and the fifth internal channel 55. As a result, the expansion force acting from the second internal channel 52 on the third internal channel 53 and the fifth internal channel 55 can further be suppressed, and the generation of the thermal stress can further be suppressed.

### [Method for Manufacturing Manifold]

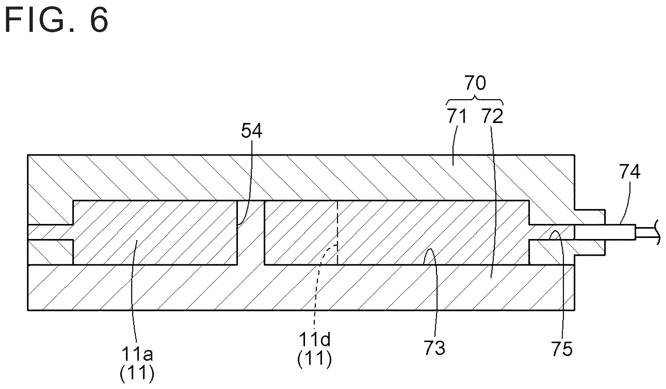

Next, a method for manufacturing the manifold 10 according to the first embodiment will be described. The housing body 11a and the lid 11b of the housing 11 of the manifold 10 are manufactured by die casting of a metal material having high thermal conductivity, including aluminum (manifold forming process). FIG. 6 shows a die-casting mold 70 (hereinafter simply referred to as a mold 70) for manufacturing the housing body 11a. The mold 70 includes a stationary mold 71 and a movable mold 72. The mold 70 has portions that define at least the second internal channel 52, the third internal channel 53, the fifth internal channel 55, and the two thermal insulation spaces 11d after casting. A mold (not shown) for manufacturing the lid 11b has portions that define the thermal insulation spaces 11d after casting.

Using the mold 70 formed in this way, the housing body 11a is manufactured by die casting. To manufacture the housing body 11a using the mold 70, the stationary mold 71 and the movable mold 72 heated by an unillustrated heater are clamped together, and then a molten metal material is injected into a cavity 73 formed by the clamping from a gate 75 by a plunger 74. At this time, the portions that define the second internal channel 52, the third internal channel 53, the fifth internal channel 55, and the two thermal insulation spaces 11d after casting are formed close to and parallel to each other in the mold 70. These portions are formed parallel to the flow direction of the molten metal injected from the gate 75. At this time, a gate mark (not shown) that is a mark of the gate 75 is formed in the housing body 11a in a direction along the second internal channel 52, the third internal channel 53, the fifth internal channel 55, and the two thermal insulation spaces 11d. As a result, in the housing body 11a, at least the second internal channel 52 and the third internal channel 53 are formed close to each other and at least the second internal channel 52 and the fifth internal channel 55 are formed close to each other. Further, the thermal insulation spaces 11d are formed between the second internal channel 52 and the third internal channel 53 and between the second internal channel 52 and the fifth internal channel 55. By manufacturing the lid 11b using the unillustrated mold, the thermal insulation spaces 11d are formed in the lid 11b. At this time, the portions that define the thermal insulation spaces 11d of the lid 11b after casting are formed in the mold parallel to the flow direction of a molten metal injected from an unillustrated gate. As described above, at least the second internal channel 52, the third internal channel 53, the fifth internal channel 55, and the thermal insulation spaces 11d manufactured by die casting are cast-hole portions. The housing 11 is an aluminum die-cast product.

Next, as described above, shot peening is performed on (1) the surfaces of the housing body 11a and the lid 11b of the housing 11 in regions overlapping the third internal channel 53 and the fifth internal channel 55 in plan view and in nearby regions, and (2) the periphery of the surface of the housing body 11a that serves as an inlet or an outlet for the auxiliary device (e.g., the water-cooled condenser 12) in the third internal channel 53 and the fifth internal channel 55 in regions overlapping the third internal channel 53 and the fifth internal channel 55 and in nearby regions. After the shot peening, the housing 11 is assembled by joining the housing body 11a and the lid 11b with bolts etc. Then, the above auxiliary devices are attached to the outer surface of the housing 11, and the manifold 10 is completed.

With the die-casting mold 70 having the portions that define the second internal channel 52, the third internal channel 53, the fifth internal channel 55, and the thermal insulation spaces 11d after casting, the number of steps and the cost of the manifold 10 can be reduced compared with the case where at least one of the portions that define the second internal channel 52, the third internal channel 53, the fifth internal channel 55, and the thermal insulation spaces 11d is formed in a subsequent step after casting. In particular, the thermal insulation spaces 11d were conventionally formed using a wire cutter in a subsequent step, leading to an increase in the number of steps and the associated costs. With the mold having the portions that define the thermal insulation spaces 11d after casting, the processing step using the wire cutter can be eliminated.

When the portions that define the second internal channel 52, the third internal channel 53, the fifth internal channel 55, and the two thermal insulation spaces 11d after casting are formed close to and parallel to each other in the mold 70 and also parallel to the flow direction of the molten metal injected from the gate 75, a high-quality housing body 11a with less casting defects such as blowholes can be manufactured without impeding the flow of the molten metal. The same applies to the lid 11b. The term "parallel" means not only that two portions are disposed completely parallel to each other, but also that one portion is disposed with an inclination with respect to the other portion so as not to impede the flow of the molten metal.

### [Other Embodiments]

(1) The first embodiment and its modification illustrate the state in which the second internal channel 52, the third internal channel 53, and the fifth internal channel 55 are disposed close to and parallel to each other. However, the present disclosure is not limited to this. The second internal channel 52, the third internal channel 53, and the fifth internal channel 55 need not be disposed parallel to each other as long as they are close to each other.
(2) In the first embodiment and its modification, the shot peening is performed on the surfaces of the housing 11 including the regions where the low-temperature channels (third internal channel 53 and fifth internal channel 55) overlap in plan view, thereby forming the shot-peened portions 11c. However, the present disclosure is not limited to this. Only the thermal insulation spaces 11d may be provided without providing the shot-peened portions 11c. This reduces the number of steps required for the shot peening. Thus, the cost can further be reduced.
(3) In the embodiments described above, the refrigerant is used as the fluid. However, the present disclosure is not limited to this. The fluid may be a liquid such as a coolant.

The following configurations are possible for the embodiments described above.
<1> In one embodiment of the manifold (10), the manifold (10) includes: a high-temperature channel (52) through which a high-temperature fluid flows; a low-temperature channel (53, 55) through which a low-temperature fluid having a lower temperature than the high-temperature fluid flows; and a manifold body (11) having the high-temperature channel (52) and the low-temperature channel (53, 55). The high-temperature channel (52) and the low-temperature channel (53, 55) are disposed close to each other. The manifold body (11) has a thermal insulation space (11d) between the high-temperature channel (52) and the low-temperature channel (53, 55) in a location where the high-temperature channel (52) and the low-temperature channel (53, 55) are disposed close to each other.
   According to the present embodiment, an expansion force due to heat of the high-temperature fluid acts on the inner circumferential surface of the high-temperature channel (52), and a contraction force due to cooling by the low-temperature fluid acts on the inner circumferential surface of the low-temperature channel (53, 55). However, a portion particularly close to the high-temperature channel (52) on the inner circumferential surface of the low-temperature channel (53, 55) where the contraction force acts is influenced by the expansion force due to the heat of the high-temperature fluid, and thermal stress (tensile stress) is generated. When the thermal stress acts repeatedly, the portion may be cracked and the manifold (10) may be damaged in the worst case. However, the manifold (10) of the present embodiment has the thermal insulation space (11d) in the location where the high-temperature channel (52) and the low-temperature channel (53, 55) are disposed close to each other. Therefore, it is possible to suppress heat transfer between the high-temperature channel (52) and the low-temperature channel (53, 55). As a result, the action of the expansion force due to the heat of the high-temperature fluid on the low-temperature channel (53, 55) is suppressed, and the generation of the thermal stress in the low-temperature channel (53, 55) can be suppressed.
<2> In the manifold (10) according to <1>, it is preferable that the manifold body (11) be an aluminum die-cast product, and the thermal insulation space (11d) be a cast-hole portion.
   According to the present embodiment, the manifold body (11) can be manufactured at lower cost than in a manufacturing method in which the manifold body (11) is formed by cutting aluminum etc. Since the thermal insulation space (11d) can be formed during casting, there is no need for a separate step to form the thermal insulation space (11d).
<3> In the manifold (10) according to <1> or <2>, it is preferable that a plurality of the thermal insulation spaces (11d) be parallel to each other.
   According to the present embodiment, it becomes easier to dispose the high-temperature channel (52) between the plurality of thermal insulation spaces (11d). Therefore, the action of the expansion force due to the heat of the high-temperature fluid in the high-temperature channel (52) on the low-temperature channel (53, 55) can be suppressed effectively, and the generation of the thermal stress in the low-temperature channel (53, 55) can be suppressed easily.
<4> In the manifold (10) according to any one of <1> to <3>, it is preferable that an extending direction of the thermal insulation space (11d) be parallel to an extending direction of at least one of the high-temperature channel (52) and the low-temperature channel (53, 55).
   According to the present embodiment, the transmission of the expansion force due to the heat of the high-temperature fluid flowing through the high-temperature channel (52) to the low-temperature channel (53, 55) can further be suppressed, and the generation of the thermal stress in the low-temperature channel (53, 55) can further be suppressed.
<5> In the manifold (10) according to any one of <1> to <4>, it is preferable that, as the high-temperature fluid, a gas refrigerant compressed by a compressor (17) flow through the high-temperature channel (52), and, as the low-temperature fluid, a liquid refrigerant obtained by condensing the gas refrigerant by a condenser (12, 13) flow through the low-temperature channel (53, 55).

According to the present embodiment, the transmission of the expansion force due to the heat of the gas refrigerant flowing through the high-temperature channel (52) to the low-temperature channel (53, 55) can further be suppressed, and the generation of the thermal stress in the low-temperature channel (53, 55) can further be suppressed.

### INDUSTRIAL APPLICABILITY

The present invention is applicable to manifolds.

### Description of the Reference Numerals

10: manifold, 11: housing (manifold body), 11d: thermal insulation space (cast-hole portion), 12: water-cooled condenser (condenser), 13: air-cooled condenser (condenser), 17: compressor (compressor), 52: second internal channel (high-temperature channel), 53: third internal channel (low-temperature channel), 55: fifth internal channel (low-temperature channel)

## Claims

1. A manifold comprising:
a high-temperature channel through which a high-temperature fluid flows;
a low-temperature channel through which a low-temperature fluid having a lower temperature than the high-temperature fluid flows; and
a manifold body having the high-temperature channel and the low-temperature channel, wherein
the high-temperature channel and the low-temperature channel are disposed close to each other, and
the manifold body has a thermal insulation space between the high-temperature channel and the low-temperature channel in a location where the high-temperature channel and the low-temperature channel are disposed close to each other.

2. The manifold according to claim 1, wherein:
the manifold body is an aluminum die-cast product; and
the thermal insulation space is a cast-hole portion.

3. The manifold according to claim 1 or 2, wherein a plurality of the thermal insulation spaces is parallel to each other.

4. The manifold according to claim 1 or 2, wherein an extending direction of the thermal insulation space is parallel to an extending direction of at least one of the high-temperature channel and the low-temperature channel.

5. The manifold according to claim 1 or 2, wherein:
as the high-temperature fluid, a gas refrigerant compressed by a compressor flows through the high-temperature channel; and
as the low-temperature fluid, a liquid refrigerant obtained by condensing the gas refrigerant by a condenser flows through the low-temperature channel.
